# EUROPEAN PATENT APPLICATION

(11) **EP 2 068 249 A1**
(43) Date of publication of application: **10.06.2009**
(21) Application number: 08167405.3
(22) Date of filing: 23.10.2008
(51) Int. Cl.: G06F 13/40

(54) **Detection system for peripheral device**

(30) Priority: 30.11.2007 TW 96145804
(71) Applicant: Giga-Byte Technology Co., Ltd., Hsin-Tien Taipei County (TW)
(72) Inventor: Lin, Hou-Yuan, Hsin-Tien (TW); Chen, Chen-Shun, Hsin-Tien (TW)
(74) Representative: Viering, Jentschura & Partner

(57) **Abstract**

A detection system for a peripheral device is used for detecting whether the peripheral device is correctly inserted in a corresponding peripheral device slot of a mainboard before power-on. When the peripheral device is inserted in the peripheral device slot, the detection system determines whether the peripheral device is completely inserted in the peripheral device slot according to the potential of the pins in the slot. If it is detected that the peripheral device is not completely inserted in the peripheral device slot before power-on, the detection system stops the boot program of the mainboard and sends out an alarm signal.

## Description

### BACKGROUND OF THE INVENTION

### Field of Invention

The present invention relates to a detection system for a peripheral device, and more particularly to a system for detecting whether each peripheral device of a personal computer (PC) is completely inserted in a corresponding peripheral device slot of a mainboard before power-on.

### Related Art

Usually the function of a PC is expanded through various peripheral devices. Taking a PC for example, generally, its mainboard is provided with peripheral component interface (PCI) expansion slots. Thus, a user can buy corresponding PCI peripheral devices to expand the function of the mainboard.

For example, if the user intends to install a Serial ATA (SATA) hard disk drive, while the mainboard does not provide a corresponding interface, the user may buy an SATA-PCI peripheral device to expand the function of the mainboard to support SATA.

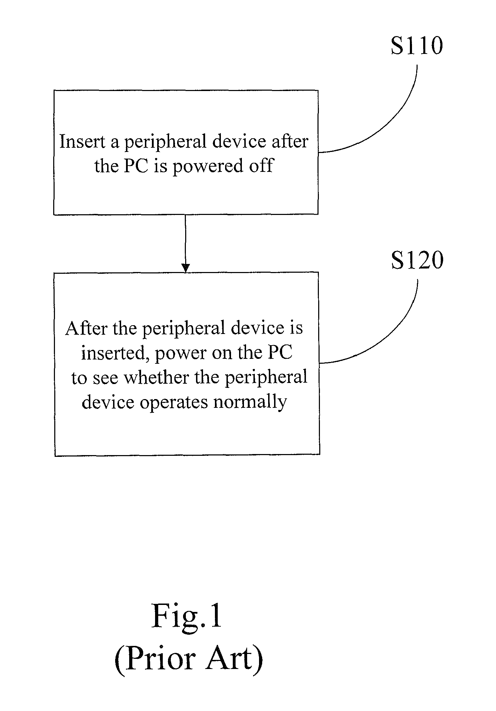

Referring to FIG. 1, a flow chart of a conventional insertion test is shown. Generally, the installation process is divided into two steps. First, a peripheral device is inserted after the PC is powered off (Step S110). After the peripheral device is inserted, the PC is powered on to see whether the peripheral device operates normally (Step S120). However, the user cannot know immediately whether the peripheral device is correctly inserted in the PCI expansion slot, and may only determine the insertion state of the peripheral device by observing whether a basic input output system (BIOS) or an operating system is connected to the peripheral device after power-on. Therefore, such test is not only time and energy consuming, but also may cause damages to the peripheral device due to insertion errors. As a result, it is inconvenient for the user on installation and also increases the maintenance cost for the manufacturer.

### SUMMARY OF THE INVENTION

Accordingly, the present invention is mainly directed to a detection system for a peripheral device, so as to detect whether the peripheral device is correctly inserted in a corresponding peripheral device slot of a mainboard before power-on.

In order to achieve the above objective, a detection system for a peripheral device is provided, which includes a power supply unit, a logic component, and a detecting unit. After the mainboard is booted, the power supply unit provides a first power for the mainboard and the peripheral device to operate, and when the mainboard is shut down, the power supply unit provides a second power for the mainboard to remain in a minimum operation. An input end of the logic component is electrically connected to a first measuring pin and a second measuring pin of the peripheral device slot respectively, and the first and second measuring pins are further respectively corresponding to a ground pin of the peripheral device. When the peripheral device is inserted in the peripheral device slot, the logic component outputs a determination output value according to the potentials of the first and second measuring pins. The detecting unit is electrically connected to an output pin of the logic component, for determining whether each peripheral device is inserted in the corresponding peripheral device slot according to the determination output value. In addition, on detecting that the peripheral device is not completely inserted in the peripheral device slot before power-on, the detecting unit stops the boot program of the mainboard and sends out an alarm signal.

A detection system for a peripheral device is provided, for determining whether a peripheral device is completely inserted in a peripheral device slot of a mainboard before power-on according to the change in the potential of a first and a second measuring pin of the peripheral device. On detecting that the peripheral device is not completely inserted in the peripheral device slot before power-on, the detecting unit sends a control signal to the mainboard, and the mainboard sends an alarm signal to inform the user. Meanwhile, the boot program of the mainboard is stopped to prevent damages to the mainboard and the peripheral device due to installation errors of the peripheral device.

### BRIEF DESCRIPTION OF THE DRAWINGS

The present invention will become more fully understood from the detailed description given herein below for illustration only, and thus are not limitative of the present invention, and wherein:
FIG. 1 is a flow chart of a conventional insertion test;
FIG. 2 is a schematic architectural view of the present invention;
FIG. 3 is a schematic view of a false installation of a peripheral device;
FIG. 4a is a schematic view of a false installation of a peripheral device;
FIG. 4b is a schematic view of a false installation of a peripheral device;
FIG. 5 is a schematic architectural view of the present invention using a NOR gate; and
FIG. 6 is a schematic view of the present invention detecting peripheral devices using a dip switch.

### DETAILED DESCRIPTION OF THE INVENTION

A detection system for a peripheral device is provided for detecting a peripheral device of a PC, so as to make sure whether the peripheral device is correctly inserted in a corresponding peripheral device slot of a mainboard before power-on. In a preferred embodiment of the present invention, taking a PC for example, the PC at least includes a mainboard 210, a power supply unit 220, a peripheral device 230, a peripheral device slot 240, and a detection system 250. The interface of the peripheral device 230 is one corresponding to a central process unit (CPU) or a memory, or is an accelerated graphics port (AGP) interface, a PCI interface, a PCI-E interface, an SATA interface, or an integrated device electronics (IDE) interface.

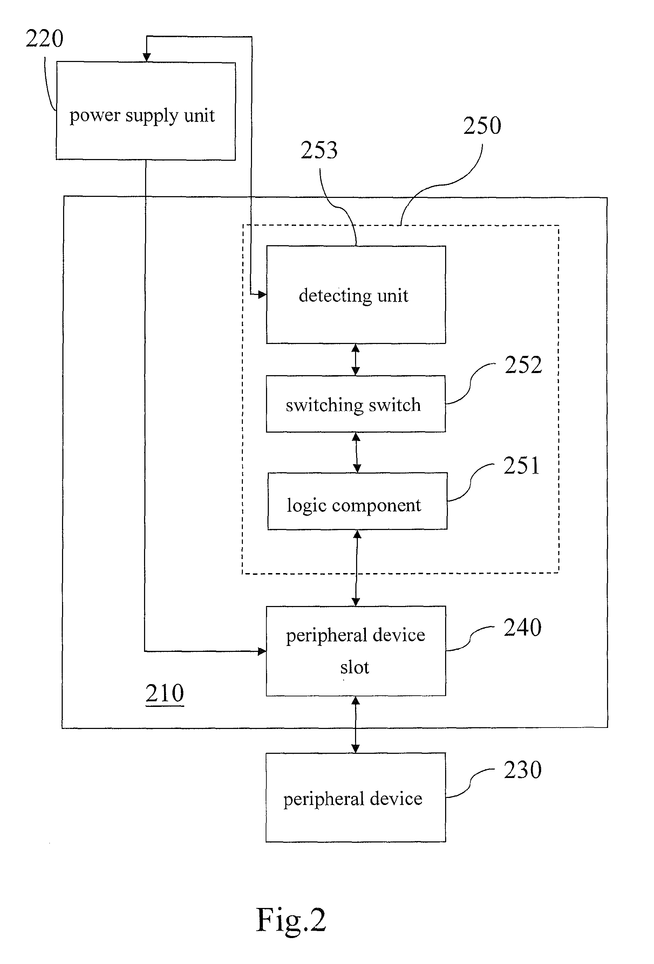

The detection system 250 includes a logic component 251, a switching switch 252, and a detecting unit 253. Referring to FIG. 2, a schematic architectural view of the present invention is shown. In the present invention, the power supply unit 220 follows the Advanced Technology extend (ATX) power supply standard. The ATX not only specifies the power supply voltage for the operation of the mainboard 210, but also describes the basic power supply for the peripheral device 230 when shut-down. The ATX provides the following different voltages: "+3.3 V", "+5 V", "+12 V", "-12 V", "-5 V", and "+5 V Stand-By". For instance, "+12 V" is used to drive a disc drive motor and a cooling fan when the mainboard 210 is booted, or to drive the peripheral device 230 through the peripheral device slot 240 of the mainboard 210.

Generally, the mainboard 210 is provided with a BIOS. The BIOS may be stored in an electrically erasable programmable read-only memory (EEPROM) or other flash memories, and used for managing the operating procedure of the mainboard 210. After the mainboard 210 is booted, the power supply unit 220 provides a first power for the mainboard 210 and the peripheral device 230 to operate, and when the mainboard 210 is shut down, the power supply unit 220 provides a second power for the mainboard 210 to remain in a standby operation. In the present invention, the second power provided when the mainboard 210 is shut down is adopted as the power for performing the detection.

An input end of the logic component 251 is electrically connected to a first measuring pin and a second measuring pin of the peripheral device slot 240 respectively. In addition, the first and second measuring pins are further respectively corresponding to a ground pin of the peripheral device 230. When the peripheral device 230 is inserted in the peripheral device slot 240, the logic component 251 outputs a determination output value according to the potentials of the first and second measuring pins.

The detecting unit 253 is electrically connected to an output pin of the logic component 251, for determining whether each peripheral device 230 is inserted in the corresponding peripheral device slot 240 according to the determination output value. In addition, on detecting that the peripheral device 230 is not completely inserted in the peripheral device slot 240 before power-on, the detecting unit 253 stops the boot program of the BIOS and sends out an alarm signal.

In the present invention, if the peripheral device 230 is not inserted in the peripheral device slot 240, the first and second measuring pins of the peripheral device slot 240 are both at a high potential. It should be noted that, when the peripheral device 230 is completely inserted in the peripheral device slot 240, the first and second measuring pins are electrically connected to the ground pin of the peripheral device respectively, such that the potential of the first measuring pin changes from a high potential to a low potential, and the potential of the second measuring pin changes from a high potential to a low potential. Therefore, when the detecting unit 253 detects that the first and second measuring pins are both at a low potential, it indicates that the peripheral device 230 is truly inserted in the peripheral device slot 240.

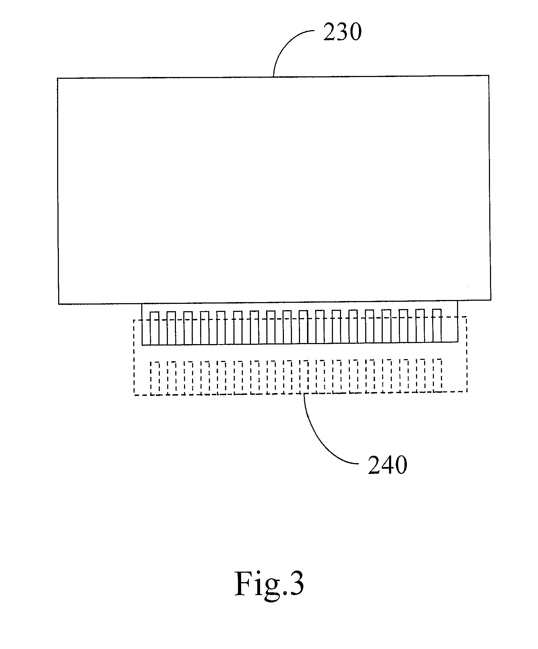

Circumstances that the peripheral device 230 is not completely inserted in the peripheral device slot 240 are shown below. The first circumstance is that, as the peripheral device 230 is not truly inserted in the peripheral device slot 240, the first and second measuring pins are not connected to the peripheral device 230, such that the first and second measuring pins both remain at a high potential. Referring to FIG. 3, a schematic view of a false installation of the peripheral device is shown.

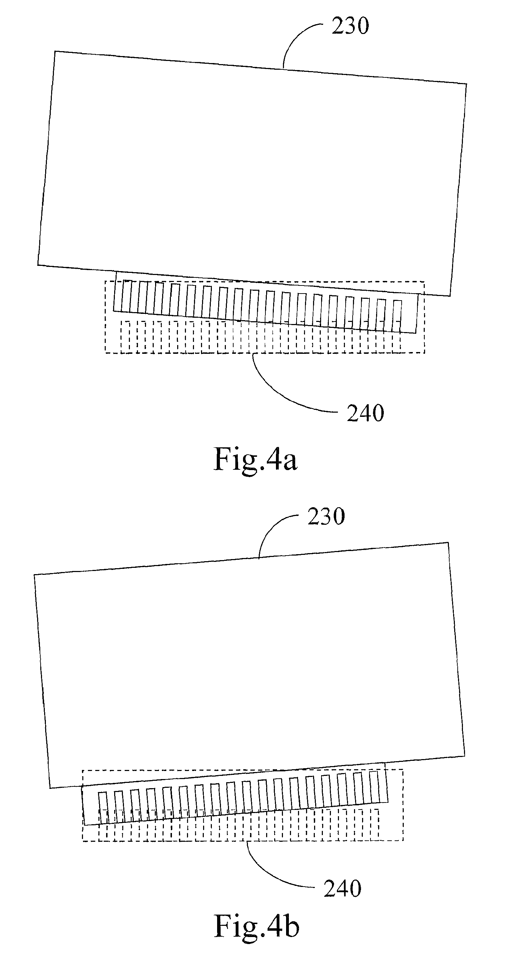

The second and third circumstances are that, as an end of the peripheral device 230 is not truly inserted in the peripheral device slot 240, the first and second measuring pins may have different voltages. Referring to FIGs. 4a and 4b, schematic views of various false installations of the peripheral device are shown respectively. For example, if only the first measuring pin is connected to the peripheral device 230, the potential of the first measuring pin changes into a low potential, and meanwhile, if the second measuring pin is not connected to the peripheral device 230, the second measuring pin still remains at a high potential.

It should be noted that, the change of the potential in the above circumstances is input into the logic component 251, and the logic component 251 thus outputs a corresponding determination output value. In addition, the logic component 251 determines through a NOR gate.

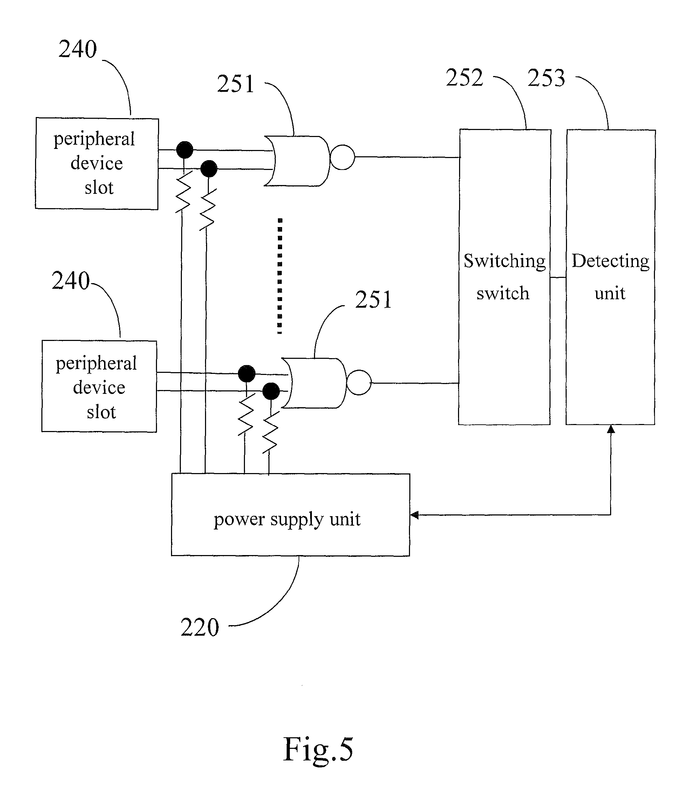

An input end of the NOR gate is electrically connected to the first and second measuring pins respectively, and an output end of the NOR gate is connected to a testing unit. Referring to FIG. 5, a schematic architectural view of the present invention using a NOR gate is shown. The following results listed in Table 1 are obtained after the potential output from the first and second measuring pins passes through the NOR gate.

**Table 1 Truth Table for NOR Gate**

| First Measuring Pin | Second Measuring Pin | Output End |
|---|---|---|
| 0 | 0 | 1 |
| 0 | 1 | 0 |
| 1 | 0 | 0 |
| 1 | 1 | 0 |

In Table 1, "1" represents a high potential, and "0" represents a low potential. When the first measuring pin or the second measuring pin is at a low potential, the NOR gate outputs "0", and thus the detecting unit 253 determines that the peripheral device 230 is not completely inserted in the peripheral device slot 240. If the first and second measuring pins are both "0", the output end outputs "1", and thus the detecting unit 253 ensures that the peripheral device 230 is completely inserted in the peripheral device slot 240. When the first and second measuring pins are both at a high potential, the output end outputs "0", and thus the detecting unit 253 determines that the peripheral device 230 is not inserted in the peripheral device slot 240.

If the peripheral device 230 is not completely inserted in the peripheral device slot 240, the detecting unit 253 stops the boot program of the BIOS, and sends an alarm signal to the user. The alarm signal may be sent by a loudspeaker or a light-emitting diode (LED), so as to inform the user that the peripheral device 230 fails to be completely inserted. Thereby, the user can check whether the peripheral device 230 is completely inserted in the peripheral device slot 240 according to the alarm signal. As such, it is ensured that the peripheral device 230 is completely inserted in the peripheral device slot 240, and the mainboard 210 is then booted to supply power to the peripheral device 230.

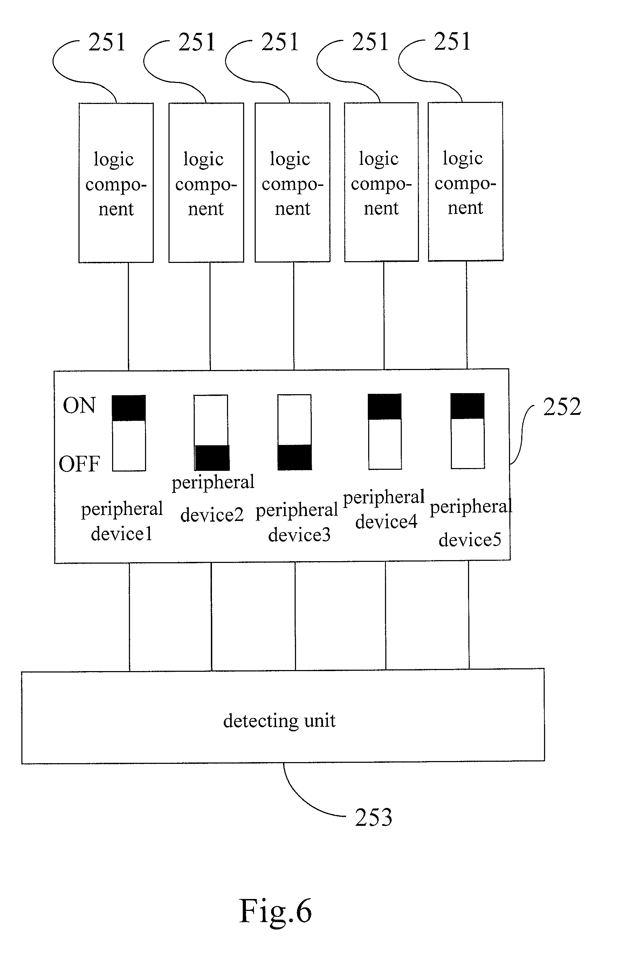

The switching switch 252 is electrically connected between the logic component 251 and the detecting unit 253, and is used for determining whether the peripheral device 230 needs to be detected by the detecting unit 253. The switching switch 252 is, for example, a dip switch. In addition, the switching switch 252 may be a hardware, or a related function set in the BIOS for determining whether the peripheral device 230 needs to be tested. Referring to FIG. 6, a schematic view of the present invention detecting peripheral devices with a dip switch is shown.

The switching switch 252 in FIGs. 5 and 6 is respectively corresponding to the peripheral device slots 240 of different logic component devices 251. On determining that some peripheral device slot 240 does not need to be tested, the user may disable the peripheral device slot 240 via the switching switch 252, such that the detecting unit 253 will skip the test on the peripheral device slot 240. For example, if the mainboard 210 both has a built-in display function and a display card slot, and the built-in display is taken by the user as a preset value when the system is booted, the test on the display card slot may be disabled, so as to shorten the detection time before the system is booted.

In view of the above, a detection system 250 for a peripheral device 230 is provided to determine whether the peripheral device 230 is completely inserted in a peripheral device slot 240 before power-on according to the change in the potentials of a first and a second measuring pin of the peripheral device 230. On detecting that the peripheral device 230 is not completely inserted in the peripheral device slot 240, the detecting unit 253 sends a control signal to a mainboard 210, and the mainboard 210 sends an alarm signal to inform the user. Meanwhile, the boot program of the mainboard 210 is stopped to prevent damages to the mainboard 210 and the peripheral device 230 due to installation errors of the peripheral device 230.

## Claims

1. A detection system for a peripheral device, for detecting whether the peripheral device is correctly inserted in a corresponding peripheral device slot of a mainboard before power-on, the detection system comprising:
a logic component, wherein an input end of the logic component is electrically connected to a first measuring pin and a second measuring pin of the peripheral device slot respectively, the first measuring pin and the second measuring pin are further respectively corresponding to a ground pin of the peripheral device, and when the peripheral device is inserted in the peripheral device slot, the logic component outputs a determination output value according to the potentials of the first measuring pin and the second measuring pin; and
a detecting unit, electrically connected to an output pin of the logic component, for determining whether each peripheral device is inserted in the corresponding peripheral device slot according to the determination output value, wherein on detecting that the peripheral device is not completely inserted in the peripheral device slot before power-on, the detecting unit stops a boot program of the mainboard and sends out an alarm signal.

2. The detection system for a peripheral device as claimed in claim 1, further comprising a power supply unit electrically connected to the peripheral devices, wherein after the mainboard is booted, the power supply unit provides a first power for the mainboard and the peripheral devices to operate, and when the mainboard is shut down, the power supply unit provides a second power for the mainboard to remain in a standby operation.

3. The detection system for a peripheral device as claimed in claim 1, wherein when the peripheral device is completely inserted in the peripheral device slot, the first measuring pin and the second measuring pin are electrically connected to the ground pin of the peripheral device respectively, such that the potential of the first measuring pin changes from a high potential to a low potential, and the potential of the second measuring pin changes from a high potential to a low potential.

4. The detection system for a peripheral device as claimed in claim 1, wherein the logic component is an EXCLUSIVE NOR gate, an input end of the EXCLUSIVE NOR gate is electrically connected to the first measuring pin and the second measuring pin respectively, and an output end of the EXCLUSIVE NOR gate is connected to the detecting unit.

5. The detection system for a peripheral device as claimed in claim 1, wherein the mainboard further has a basic input output system (BIOS), for managing operating procedures of the mainboard.

6. The detection system for a peripheral device as claimed in claim 5, wherein if the detecting unit detects that the peripheral device is not completely inserted in the peripheral device slot before power-on, the BIOS switches the power supply unit to provide the second power for the mainboard to operate.

7. The detection system for a peripheral device as claimed in claim 1, further comprising a switching switch, for determining whether the peripheral devices need to be detected by the detecting unit.
